# EUROPEAN PATENT APPLICATION

(11) **EP 4 468 393 A1**
(43) Date of publication of application: **27.11.2024**
(21) Application number: 22960207.3
(22) Date of filing: 30.09.2022
(51) Int. Cl.: H01M 4/133, H01M 4/62, H01M 4/583

(54) **SODIUM-ION BATTERY AND ELECTRIC DEVICE COMPRISING SAME**

(71) Applicant: Contemporary Amperex Technology Co., Limited, Ningde, Fujian 352100 (CN)
(72) Inventor: QIN, Meng, Ningde, Fujian 352100 (CN); GUAN, Yingjie, Ningde, Fujian 352100 (CN); YANG, Huiling, Ningde, Fujian 352100 (CN); ZHAO, Yuzhen, Ningde, Fujian 352100 (CN); WEN, Yan, Ningde, Fujian 352100 (CN); HUANG, Qisen, Ningde, Fujian 352100 (CN)
(74) Representative: Kraus & Lederer PartGmbB
(86) International application number: PCT/CN2022/123008
(87) International publication number: WO 2024/065576

(57) **Abstract**

This application relates to a sodium-ion battery and an electric apparatus containing the same. The sodium-ion battery includes a positive electrode plate, a separator, and a negative electrode current collector. The separator is disposed between the positive electrode plate and the negative electrode current collector. A coating is provided on a surface of the negative electrode current collector, the coating includes a carbon material, and the carbon material includes carbon nanotubes. The sodium-ion battery can effectively enhance the suppression of sodium dendrites and improve the cycling performance. In addition, it is unnecessary to additionally provide a negative electrode active material layer, reducing the costs of the sodium-ion battery and improving the energy density of the sodium-ion battery.

## Description

### TECHNICAL FIELD

This application relates to the field of sodium battery technologies, and in particular, to a sodium-ion battery and an electric apparatus containing the same.

### BACKGROUND

As a secondary battery, a sodium-ion battery works mainly relying on migration of sodium ions between a positive electrode and a negative electrode. During charging, Na⁺ deintercalate from the positive electrode and then intercalate into the negative electrode after running through a separator, allowing the positive electrode to be in a sodium-deficient state with a high potential and the negative electrode to be in a sodium-rich state with a low potential. On the contrary, during discharging, Na⁺ deintercalate from the negative electrode and then intercalate into a positive electrode material after running through the separator, so that the positive electrode is restored to the sodium-rich state.

Compared with lithium-ion batteries, sodium-ion batteries have the advantages of better safety performance, extensive sources, and low costs. However, relatively large ion mass and ion radius of the sodium-ion batteries result in their lower energy density than the lithium-ion batteries, which hinders their development to some extent.

### SUMMARY

This application has been made in view of the foregoing issues, with an objective to provide a sodium-ion battery and an electric apparatus containing the same.

According to a first aspect, this application provides a sodium-ion battery including a positive electrode plate, a separator, and a negative electrode current collector. The separator is disposed between the positive electrode plate and the negative electrode current collector. A coating is provided on a surface of the negative electrode current collector, the coating includes a carbon material, and the carbon material includes carbon nanotubes.

According to a second aspect, this application provides an electric apparatus including the sodium-ion battery according to the first aspect.

### BRIEF DESCRIPTION OF DRAWINGS

FIG. 1 is a schematic diagram of a sodium-ion battery according to an embodiment of this application;
FIG. 2 is an exploded view of the sodium-ion battery according to the embodiment of this application shown in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4;
FIG. 6 is a schematic diagram of an electric apparatus using a sodium-ion battery as a power source according to an embodiment of this application; and

### Description of reference signs:

1. battery pack; 2. upper box body; 3. lower box body; 4. battery module; 5. sodium-ion battery; 51. housing; 52. electrode assembly; 53. cover plate; and 6. electric apparatus.

FIG. 7 is a picture of a disassembled negative electrode of a sodium-ion secondary battery in Example 1 after charging and discharging.

### DESCRIPTION OF EMBODIMENTS

The following specifically discloses in detail embodiments of the sodium-ion battery and electric apparatus containing the same of this application with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Currently, to further reduce the costs of batteries and improve the energy density of the batteries, one type of anode-free batteries whose negative electrodes contain no conventional negative electrode active material layer has been developed in the field of lithium-ion batteries. However, less research has been conducted on the anode-free batteries in the field of sodium-ion batteries. If a negative electrode active material layer is directly omitted in a negative electrode of the sodium-ion battery, sodium metal deposited on a negative electrode current collector will form severe sodium dendrites in a charge and discharge process, resulting in poor cycling performance of the battery.

There is a method to provide a negative electrode plate of the sodium-ion battery, which omits the negative electrode active material layer. The main solution is to provide a carbon material layer on a surface of the negative electrode current collector and make the sodium metal deposited in the charge and discharge process be deposited on the carbon material layer (the surface). Although the presence of the carbon material can suppress the formation of the sodium dendrites to some extent, the effect is limited, and the sodium dendrites are still prone to appear during long-time charge and discharge cycles. Furthermore, in the specific implementation of this method, it is necessary to pre-deposit a sodium metal layer (thickness of the pre-deposited sodium metal layer is typically approximately 1 µm) on the surface of the carbon material layer, creating a sodium-rich surface similar to a negative electrode of a sodium metal battery. Additionally, it is necessary to use a carbon material with oxygen groups on the surface, ensuring the uniform deposition of the sodium metal on the surface of the carbon material layer and reducing the formation of the sodium dendrites. This definitely increases the costs of the sodium-ion battery and reduces the energy density of the battery. In addition, since the sodium metal is very active, pre-depositing sodium metal layer has serious safety risks during actual production, with strict requirements on the humidity and environment of the workshop, increasing process costs.

In view of this, an embodiment of this application provides a sodium-ion battery including a positive electrode plate, a separator, and a negative electrode current collector. The separator is disposed between the positive electrode plate and the negative electrode current collector. A coating is provided on a surface of the negative electrode current collector, the coating includes a carbon material, and the carbon material includes carbon nanotubes.

In the foregoing sodium-ion battery, on the basis that a negative electrode active material layer is omitted, the carbon nanotube is selected as the carbon material. Using a tube structure of the carbon nanotube makes a sodium metal layer be deposited on at least one of an inner wall of the carbon nanotube, an outer wall of the carbon nanotube, and the surface of the negative electrode current collector. In this way, the carbon nanotube can suppress the formation of the sodium dendrites by reducing the overpotential for sodium metal deposition (that is, nucleation overpotential, reducing the nucleation energy barrier for sodium metal deposition). More importantly, the tube structure and restriction effect of the carbon nanotube can suppress the growth of the sodium dendrites, effectively enhancing the suppression on the formation of the sodium dendrites. Additionally, the SEI film on the surface of the carbon nanotube can be secured, improving the cycling performance of the sodium-ion battery. In addition, it is unnecessary to additionally provide a sodium metal layer, truly reducing the costs of the sodium-ion battery and improving the energy density of the sodium-ion battery.

In some embodiments, the carbon nanotube is used as the carbon material.

In some embodiments, a sodium metal layer is formed on at least one of an inner wall of the carbon nanotube, an outer wall of the carbon nanotube, and the surface of the negative electrode current collector.

In some embodiments, the sodium metal layer is formed in a charge and discharge process of the sodium-ion battery. Without limitation, the charge and discharge process may include a charge and discharge process during formation or a charge and discharge process during use.

In some embodiments, thickness of the sodium metal layer is P, where 0<P≤400 nm; and optionally, the thickness P of the sodium metal layer satisfies 150≤P≤300 nm. Different from a sodium metal layer additionally provided in a negative electrode of an existing sodium-ion battery, this sodium metal layer is formed after first charge and discharge, with a smaller thickness. Specifically, the thickness of the sodium metal layer includes but is not limited to 150 nm, 160 nm, 165 nm, 171 nm, 175 nm, 180 nm, 185 nm, 188 nm, 192 nm, 200 nm, 202 nm, 205 nm, 208 nm, 210 nm, 211 nm, 215 nm, 220 nm, 222 nm, 227 nm, 232 nm, 235 nm, 240 nm, 260 nm, 280 nm, and 300 nm, or is within a range defined by any two of these values.

In some embodiments, a specific surface area of the carbon nanotube is greater than or equal to 500 m²/g. Further, the specific surface area of the carbon nanotube is 500-1500 m²/g. Still further, the specific surface area of the carbon nanotube is 750-1000 m²/g. Properly controlling the specific surface area of the carbon nanotube can provide an appropriate gap for deposition of the sodium metal layer, allowing for uniform distribution of the sodium metal layer on the inner wall and outer wall of the carbon nanotube. Specifically, the specific surface area of the carbon nanotube includes but is not limited to 500 m²/g, 520 m²/g, 540 m²/g, 560 m²/g, 600 m²/g, 640 m²/g, 660 m²/g, 680 m²/g, 730 m²/g, 740 m²/g, 750 m²/g, 755 m²/g, 760 m²/g, 770 m²/g, 800 m²/g, 820 m²/g, 850 m²/g, 890 m²/g, 920 m²/g, 950 m²/g, 980 m²/g, 990 m²/g, 995 m²/g, 1000 m²/g, 1200 m²/g, 1250 m²/g, 1300 m²/g, 1400 m²/g, 1460 m²/g, and 1500 m²/g, or is within a range defined by any two of these values.

In some embodiments, a tube diameter of the carbon nanotube is 0.5-50 nm. Further, the tube diameter of the carbon nanotube is 10-40 nm, facilitating the deposition of the sodium metal layer on the inner wall of the carbon nanotube. Specifically, the tube diameter of the carbon nanotube includes but is not limited to 0.5 nm, 3 nm, 5 nm, 8 nm, 10 nm, 12 nm, 15 nm, 18 nm, 20 nm, 22 nm, 25 nm, 30 nm, 35 nm, 38 nm, 40 nm, 42 nm, 45 nm, and 50 nm, or is within a range defined by any two of these values.

In addition, in some embodiments, a number of metal nanoparticles are attached to the carbon nanotube. This can provide a large quantity of nucleation sites for the deposition of the sodium metal layer. It can be understood that "being attached to the carbon nanotube" includes being attached to the inner wall and outer wall of the carbon nanotube. Further, a number of metal nanoparticles are attached to the inner wall of the carbon nanotube. This can effectively induce preferential deposition of the sodium metal layer on the inner wall of the carbon nanotube, avoiding the growth of sodium metal dendrites on the surface of the carbon material layer, and further suppressing the formation of the sodium dendrites. It can be understood that multiple means two or more, including but not limited to 2, 3, 4, 10, 60, 100, 500, or more.

In some embodiments, a metal in the metal nanoparticle is a metal capable of forming an alloy with sodium. The "metal capable of forming an alloy with sodium" means that the metal is capable of undergoing electrochemical alloying reactions with sodium in a charge process, thereby effectively suppressing the growth of the sodium dendrites.

Further, the metal nanoparticle includes one or more of Au nanoparticle, Ag nanoparticle, Bi nanoparticle, Sn nanoparticle, Co nanoparticle, Ni nanoparticle, Mg nanoparticle, and Zn nanoparticle.

In some embodiments, particle size of the metal nanoparticle is at least 0.2 nm smaller than the tube diameter of the carbon nanotube. This leaves appropriate space to avoid affecting the deposition of the sodium metal layer. Further, the particle size of the metal nanoparticle is 0.2-10 nm smaller than the tube diameter of the carbon nanotube. Still further, the particle size of the metal nanoparticle is 1-5 nm smaller than the tube diameter of the carbon nanotube. Specifically, the value by which the particle size of the metal nanoparticle is smaller than the tube diameter of the carbon nanotube includes but is not limited to 0.2 nm, 0.5 nm, 0.8 nm, 1 nm, 2 nm, 3 nm, 4 nm, 4.5 nm, 4.8 nm, 5 nm, 5.5 nm, 6 nm, 7 nm, 8 nm, 9 nm, 9.5 nm, and 10 nm, or is within a range defined by any two of these values.

In some embodiments, the particle size of the metal nanoparticle is 0.3-40 nm. Further, the particle size of the metal nanoparticle is 8-35 nm. Specifically, the particle size of the metal nanoparticle includes but is not limited to 0.3 nm, 1 nm, 3 nm, 5 nm, 7 nm, 8 nm, 9 nm, 10 nm, 12 nm, 14 nm, 16 nm, 18 nm, 20 nm, 25 nm, 30 nm, 33 nm, 34 nm, 35 nm, 36 nm, 38 nm, and 40 nm, or is within a range defined by any two of these values.

In some embodiments, in the coating, mass of the metal nanoparticle is M1, and mass of the carbon nanotube is M2, where M1:M2=0.01-0.1. This facilitates uniform deposition of the sodium metal layer. Further, M1:M2=0.03-0.07. Specifically, the ratio of M1:M2 includes but is not limited to 0.01:1, 0.02:1, 0.03:1, 0.04:1, 0.05:1, 0.06:1, 0.07:1, 0.08:1, 0.09:1, and 0.1:1, or is within a range defined by any two of these values. A test method of M1:M2 may be as follows: A negative electrode plate is punched into small discs, and then trace element analysis-inductively coupled plasma emission spectrometry test and CHNS elemental analysis test are performed.

In some embodiments, thickness of the coating is 0.5-15 µm. Properly controlling the thickness of the coating not only provides sufficient nucleation sites for the deposition of sodium metal and reduces the growth of the sodium dendrites, but also increases the energy density of the battery. Further, the thickness of the coating is 0.5-5 µm. Specifically, the thickness of the coating includes but is not limited to 0.5 µm, 0.7 µm, 1 µm, 1.5 µm, 2 µm, 3 µm, 4 µm, 4.5 µm, 5 µm, 5.5 µm, 6 µm, 7 µm, 8 µm, 9 µm, 10 µm, 12 µm, and 15 µm, or is within a range defined by any two of these values.

In some embodiments, a material of the coating further includes a binder. Optionally, the binder includes a polymer binder. Without limitation, the binder may include at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS). A weight percentage of the binder in the coating is 0-30wt% based on the total weight of the coating. Further, the weight percentage of the binder in the coating is 0.5-10wt% based on the total weight of the coating.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material on a polymer material matrix. The metal material includes but is not limited to copper, copper alloy, nickel, nickel alloy, titanium, titanium alloy, silver, and silver alloy. The polymer material matrix includes but is not limited to matrices of polypropylene (PP), polyethylene terephthalate (PET), polybutylene terephthalate (PBT), polystyrene (PS), and polyethylene (PE).

In some embodiments, no negative electrode active material is provided on the surface of the negative electrode current collector. The negative electrode active material may be, for example, hard carbon, soft carbon, sodium metal (herein referred to as sodium metal (with a thickness of typically approximately 1 µm) pre-deposited on the surface of the negative electrode current collector, different from the sodium metal formed in the charge and discharge process in this application), tin oxide, or cobalt-vanadium sulfide.

In addition, it can be understood that the negative electrode current collector includes two opposite surfaces in its thickness direction, and the coating is provided on either or both of the two opposite surfaces of the negative electrode current collector.

In some embodiments, the coating may be prepared on the surface of the negative electrode current collector in the following manner: the foregoing constituents used for preparing the coating, for example, the carbon nanotubes, a conductive agent, the binder, and any other constituent, are dispersed in a solvent (for example, deionized water) to produce a slurry; and the obtained slurry is applied on the negative electrode current collector, followed by a process of drying.

In some embodiments, the sodium-ion battery further includes an electrolyte. The electrolyte conducts ions between the positive electrode plate and the negative electrode current collector.

In some embodiments, the electrolyte includes an electrolytic sodium salt and a solvent.

In some embodiments, the solvent in the electrolyte includes an ether solvent. Molecules of the ether solvent can construct a stable electrode/electrolyte interface on the surface of the negative electrode current collector to form a stable solid electrolyte interface (SEI), reducing electrochemical polarization. Further, the solvent in the electrolyte includes one or more of dimethoxyethane, diethoxyethane, diethylene glycol dimethyl ether, triethylene glycol dimethyl ether, tetraethylene glycol dimethyl ether, 1,3-dioxolane, tetrahydrofuran, methyltetrahydrofurann, diphenyl ether, and crown ether.

In some embodiments, the electrolytic sodium salt in the electrolyte includes one or more of sodium hexafluorophosphate, sodium difluoroxalate borate, sodium tetrafluoroborate, sodium bisoxaloborate, sodium perchlorate, sodium hexafluoroarsenate, sodium bis(fluorosulfonyl)imide, sodium trifluoromethanesulfonate, and sodium bis(trifluoromethanesulfonyl)imide.

In some embodiments, the electrolytic sodium salt in the electrolyte has a molar concentration of 0.5 mol/L to 8 mol/L. Further, the electrolytic sodium salt in the electrolyte has a molar concentration of 1 mol/L to 4 mol/L.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature performance or low-temperature performance of the battery.

In some embodiments, the positive electrode includes a sodium transition metal oxide positive electrode, a polyanionic compound positive electrode, and a Prussian blue compound positive electrode.

Specifically, the positive electrode plate includes a positive electrode current collector and a positive electrode active substance layer formed on at least a portion of a surface of the positive electrode current collector. The positive electrode active substance layer includes a positive electrode active substance. The positive electrode active substance may include at least one of sodium transition metal oxide, polyanionic compound, and Prussian blue compound. However, this application is not limited to these materials, but may alternatively use other conventional well-known materials that can be used as positive electrode active materials for sodium-ion batteries.

In an optional technical solution in this application, in the sodium transition metal oxide, the transition metal may be at least one of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0<x≤1.

In an optional technical solution in this application, the polyanionic compound may be a type of compounds having sodium ions, transition metal ions, and tetrahedral (YO₄)ⁿ⁻ anionic units. The transition metal may be at least one of Mn, Fe, Ni, Co, Cr, Cu, Ti, Zn, V, Zr, and Ce; Y may be at least one of P, S, and Si; and n denotes the valence state of (YO⁴)ⁿ⁻.

The polyanionic compound may alternatively be a type of compounds having sodium ions, transition metal ions, tetrahedral (YO₄)ⁿ⁻ anionic units, and halogen anions. The transition metal may be at least one of Mn, Fe, Ni, Co, Cr, Cu, Ti, Zn, V, Zr, and Ce; Y may be at least one of P, S, and Si; n denotes the valence state of (YO⁴)ⁿ⁻; and the halogen may be at least one of F, Cl, and Br.

The polyanionic compound may alternatively be a type of compounds having sodium ions, tetrahedral (YO₄)ⁿ⁻ anionic units, polyhedral units (ZO_{y})^{m+}, and selectable halogen anions. Y may be at least one of P, S, and Si; n denotes the valence state of (YO₄)ⁿ⁻; Z denotes a transition metal and may be at least one of Mn, Fe, Ni, Co, Cr, Cu, Ti, Zn, V, Zr, and Ce; m denotes the valence state of (ZO_{y})^{m+}; and the halogen may be at least one of F, Cl and Br.

The polyanionic compound is, for example, at least one of NaFePO₄, Na₃V₂(PO4)₃ (sodium vanadium phosphate, NVP for short), Na₄Fe₃(PO₄)₂(P₂O₇), NaM'PO4F (M' is one or more of V, Fe, Mn, and Ni), and Na₃(VO_{y})₂(PO₄)₂F_{3-2y} (0≤y≤1).

The Prussian blue compound may be a type of compounds having sodium ions, transition metal ions, and cyanogen ions (CN⁻). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0<a≤2, 0<b<1, and 0<c<1.

In an optional technical solution in this application, the positive electrode active substance layer may further include a conductive agent, thereby improving the electrical conductivity of the positive electrode. The conductive agent is not limited to any specific type in this application, and may be selected depending on actual needs. For example, the conductive agent may be one or more of superconducting carbon, acetylene black, carbon black, Ketjen black, carbon dots, carbon nanotubes, graphite, graphene, and carbon nanofiber.

In an optional technical solution in this application, the positive electrode active substance layer may further include a binder to firmly bind a positive electrode active substance and an optional conductive agent on the positive electrode current collector. The binder is not limited to any specific type in this application, and may be selected depending on actual needs. For example, the binder may be at least one of polyvinylidene fluoride (PVDF), polytetrafluoroethylene (PTFE), polyacrylic acid (PAA), polyvinyl alcohol (PVA), ethylene-vinyl acetate (EVA), styrene-butadiene rubber (SBR), carboxymethyl cellulose (CMC), sodium alginate (SA), polymethacrylic acid (PMA), and carboxymethyl chitosan (CMCS).

In an optional technical solution in this application, the positive electrode current collector may be a conductive carbon sheet, metal foil, carbon-coated metal foil, a porous metal plate, or a composite current collector. A conductive carbon material of the conductive carbon sheet may be one or more of superconducting carbon, acetylene black, carbon black, Ketjen black, carbon dots, carbon nanotubes, graphite, graphene, and carbon nanofiber. Metal materials of the metal foil, the carbon-coated metal foil, and the porous metal plate may be each independently at least one selected from copper, aluminum, nickel, and stainless steel. The composite current collector may be a composite current collector formed by compositing metal foil with a polymer base film.

In an optional technical solution in this application, the positive electrode current collector is, for example, one or more of copper foil, aluminum foil, nickel foil, stainless steel foil, a stainless steel mesh, and carbon-coated aluminum foil, and preferably, aluminum foil.

The positive electrode plate may be prepared using a conventional method in the art. Generally, the positive electrode active substance and the optional conductive agent and binder are dissolved in a solvent (for example, N-methylpyrrolidone, NMP for short) to produce a uniform positive electrode slurry, and the positive electrode slurry is applied on the positive electrode current collector, followed by drying and cold pressing, to produce the positive electrode plate.

In addition, the separator is not limited to any particular type in this application, and may be any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, thickness of the separator is 6-40 µm, and optionally, 12-20 µm.

The foregoing sodium-ion battery may be prepared using a conventional method in the art. Specifically, the positive electrode plate, the separator, and the negative electrode current collector are stacked in sequence such that the separator is sandwiched between the positive electrode plate and the negative electrode current collector for separation, to obtain a battery cell, or the resulting stack is wound to obtain a battery cell. The battery cell is placed in an outer package. The electrolyte is injected, and sealing is performed to obtain the sodium-ion battery.

An embodiment of this application further provides a preparation method of the foregoing sodium-ion battery. The preparation method includes the following steps:
mixing a material of a coating with a solvent to prepare a slurry, where the material of the coating includes a carbon material, and the carbon material includes carbon nanotubes;
applying the slurry on a surface of a negative electrode current collector, followed by drying, to form a coating; and
laminating the negative electrode current collector with the coating, a separator, and a positive electrode plate.

In some embodiments, the sodium-ion battery is subjected to at least one charge and discharge process, and a sodium metal layer is formed on at least one of an inner wall of the carbon nanotube, an outer wall of the carbon nanotube, and the surface of the negative electrode current collector.

Without limitation, the charge and discharge process may include a charge and discharge process during formation or a charge and discharge process during use.

In some embodiments, the outer package of the sodium-ion battery may be a hard shell, for example, a hard plastic shell, an aluminum shell, or a steel shell. The outer package of a secondary battery may alternatively be a soft pack, for example, a soft pouch. A material of the soft pack may be plastic. As the plastic, polypropylene, polybutylene terephthalate, and polybutylene succinate may be listed.

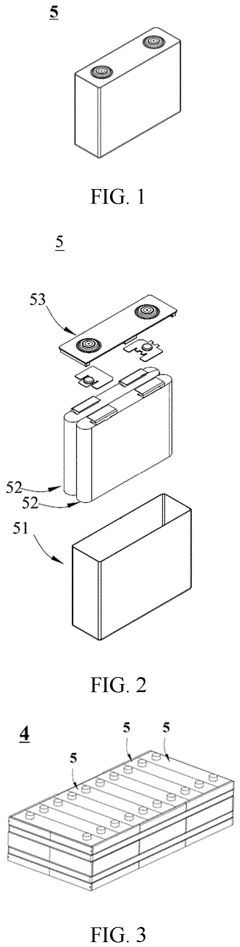

The sodium-ion battery is not limited to any particular shape in this application, and may be cylindrical, rectangular, or of any other shapes. For example, FIG. 1 shows a sodium-ion battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the sodium-ion battery 5, and persons skilled in the art may make choices depending on actual needs.

In some embodiments, the sodium-ion batteries may be assembled into a battery module, and the battery module may include one or more sodium-ion batteries. The specific quantity may be chosen by persons skilled in the art based on use and capacity of the battery module.

FIG. 3 shows a battery module 4 as an example. Referring to FIG. 3, in the battery module 4, a plurality of sodium-ion batteries 5 may be sequentially arranged along a length direction of the battery module 4. Certainly, the batteries may alternatively be arranged in any other manners. Further, the plurality of sodium-ion batteries 5 may be fixed by fasteners.

Optionally, the battery module 4 may further include a housing with an accommodating space, and the plurality of sodium-ion batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

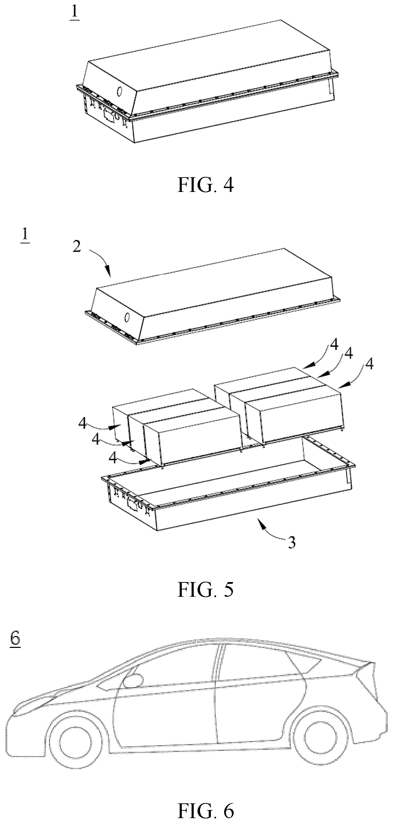

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the sodium-ion battery, the battery module, or the battery pack provided in this application. The sodium-ion battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

A sodium-ion battery, a battery module, or a battery pack may be selected for the electric apparatus depending on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of a sodium-ion battery, a battery pack or a battery module may be used.

In another example, the apparatus may be a mobile phone, a tablet computer, a notebook computer, or the like. The apparatus is generally required to be light and thin, and may use a sodium-ion battery as its power source.

### Examples

To describe the technical problems solved by this application, technical solutions, and beneficial effects of this application more clearly, the following further describes this application in detail with reference to the embodiments and accompanying drawings. Apparently, the described embodiments are merely some but not all of the embodiments of this application. The following description of at least one exemplary embodiment is merely illustrative and definitely is not construed as any limitation on this application or on use of this application. All other embodiments obtained by persons of ordinary skill in the art based on the embodiments of this application without creative efforts shall fall within the protection scope of this application.

Examples whose technical solutions or conditions are not specified are made in accordance with technical solutions or conditions described in literature in the field or made in accordance with product instructions. The reagents or instruments used are all conventional products that are commercially available if no manufacturer is indicated.

### I. Preparation examples

### Preparation example 1

### [Preparation of positive electrode plate]

A 10wt% polyvinylidene fluoride binder was fully dissolved in N-methylpyrrolidone, and a 10wt% carbon black conductive agent and an 80wt% positive electrode active material Na₄Fe₃(PO₄)₂P₂O₇ were added to produce a uniformly dispersed slurry. The slurry was uniformly applied on a surface of aluminum foil, and then fully dried in a vacuum drying oven. The resulting electrode plate was rolled and then punched to produce a positive electrode plate.

### [Preparation of negative electrode plate]

Based on the total mass percentage of a slurry, a 4wt% carbon nanotube material and a 1.6wt% polymer binder sodium carboxymethyl cellulose were added into water and stirred to produce a uniform slurry. The slurry was applied on the surface of copper foil, and then fully dried in the vacuum drying oven to form a carbon nanotube coating, followed by punching, to produce a negative electrode plate.

### [Preparation of electrolyte]

In an argon atmosphere glove box (H₂O<0.1 ppm, and O₂<0.1 ppm), a sodium salt sodium hexafluorophosphate was dissolved in an organic solvent dimethoxyethane and well stirred to produce an electrolyte which was the electrolyte in Example 1, where a concentration of the sodium salt sodium hexafluorophosphate was 1.5 mol/L.

### [Separator]

A polypropylene film was used as a separator.

### [Assembly of sodium-ion battery]

The positive electrode plate, the separator, and the negative electrode plate were stacked in sequence so that the separator was sandwiched between the positive electrode plate and the negative electrode current collector for separation, the foregoing electrolyte was added, and the resulting product was assembled into a laminated battery.

The preparation methods of the sodium-ion batteries in Examples 2 to 37 and Comparative Example 2 were similar to that in Example 1. Persons skilled in the art could obtain Examples 2 to 37 and Comparative Example 2 with parameters shown in Table 1 by changing the types of the metal nanoparticles, the specific surface areas of the carbon nanotubes, the thicknesses of the carbon nanotube coatings, and the electrolyte solvents.

The negative electrode current collectors containing the metal nanoparticles in Examples 2 to 37 were prepared in the method as follows: Based on the total mass percentage of a slurry, a 4wt% (M2) carbon nanotube material, a 1.6wt% polymer binder sodium carboxymethyl cellulose, and 0.2wt% (M1) metal nanoparticles were added into water and stirred to produce a uniform slurry. The slurry was applied on the surface of copper foil and then fully dried in the vacuum drying oven to form a carbon nanotube coating, followed by punching, to produce a negative electrode plate.

In Comparative Example 1, only the copper foil was used, and no carbon nanotube coating was prepared on the copper foil. In Comparative Example 2, the carbon nanotubes were replaced with graphite.

### II. Battery performance test

### 1. Overpotential

For example, in Example 1, the prepared sodium-ion battery was charged to 100 µA at a constant current of 0.1C at 25°C. The most negative potential obtained in this process was recorded as overpotential. A lower overpotential indicated a lower nucleation energy barrier for the deposition of Na metal and an easier deposition of the Na metal.

The test processes in comparative examples and other examples were the same as above.

### 2. Coulombic efficiency

For example, in Example 1, the prepared sodium-ion secondary battery was charged to 3.7 V at a constant current of 1/3C at 25°C and then charged at a constant voltage of 3.7 V until the current was reduced to 0.05C to obtain an initial charge capacity (Cc1). Then, the battery was discharged to 2.5 V at a constant current of 1/3C to obtain an initial discharge capacity (Cd1), and the coulombic efficiency of the sodium-ion battery was calculated according to the following formula: Coulombic efficiency of sodium-ion battery = initial discharge capacity (Cd1)/initial charge capacity (Cc1).

The test processes in comparative examples and other examples were the same as above.

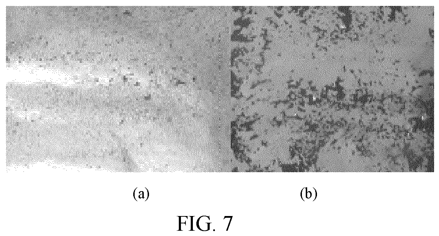

In addition, the negative electrode of the charged and discharged sodium-ion secondary battery in Example 1 was disassembled and photographed. As shown in FIG. 7, figure (a) showed the sodium metal layer peeled off from the negative electrode, and figure (b) showed the corresponding negative electrode. This indicated that the sodium metal layer was formed on each of the inner wall and outer wall of the carbon nanotube as well as the surface of the negative electrode current collector.

### 3. Capacity retention rate

For example, in Example 1, the sodium-ion battery was charged to 3.7 V at a constant current of 1C at 25°C, charged at a constant voltage of 3.7 V until the current was reduced to 0.05C, and then discharged to 2.5 V at a constant current of 1C to obtain a first-cycle discharge capacity (Cd1). The battery was repeatedly charged and discharged to the n-th cycle in such way to obtain a discharge capacity of the sodium-ion battery after n cycles. The obtained discharge capacity was denoted as Cdn. The capacity retention rate of the sodium-ion battery was calculated according to the following formula: Capacity retention rate = discharge capacity (Cdn) after n cycles/first-cycle discharge capacity (Cd1).

The test processes in comparative examples and other examples were the same as above.

### 4. Sodium dendrites

The sodium-ion battery after 100 cycles was disassembled in an argon atmosphere glove box (H₂O<0.1 ppm, and O₂<0.1 ppm), and the surface morphology of the negative electrode plate was visually observed to determine whether the sodium dendrites were formed. The absence of white spots on the negative electrode plate was determined as the absence of sodium dendrites, the presence of scattered white spots on the negative electrode plate was determined as the slight presence of sodium dendrites, and the presence of dense white spots on the negative electrode plate was determined as the severe presence of sodium dendrites.

For test results, refer to Table 2.

**Table 1**

| No. | Carbon nanotube | Specific surface area of carbon nanotube (m²/g) | Tube diameter of carbon nanotube (nm) | Particle size of metal nanoparticle (nm) | Thickness of carbon nanotube coating (µm) | M1:M2 | Solvent of electrolyte |
|---|---|---|---|---|---|---|---|
| Example 1 | **Carbon nanotube** | 980 | 25 | / | 5 | 0.05 (0.2wt%:4wt%) | Dimethoxyethane |
| Example 2 | **Au nanoparticle@carbon nanotube** | 980 | 25 | 20 | 5 | 0.05 (0.2wt%:4wt%) | Dimethoxyethane |
| Example 3 | **Ag nanoparticle@carbon nanotube** | 980 | 25 | 20 | 5 | 0.05 (0.2wt%:4wt%) | Dimethoxyethane |
| Example 4 | **Bi nanoparticle@carbon nanotube** | 980 | 25 | 20 | 5 | 0.05 (0.2wt%:4wt%) | Dimethoxyethane |
| Example 5 | **Sn nanoparticle@carbon nanotube** | 980 | 25 | 20 | 5 | 0.05 (0.2wt%:4wt%) | Dimethoxyethane |
| Example 6 | **Co nanoparticle@carbon nanotube** | 980 | 25 | 20 | 5 | 0.05 (0.2wt%:4wt%) | Dimethoxyethane |
| Example 7 | **Ni nanoparticle@carbon nanotube** | 980 | 25 | 20 | 5 | 0.05 (0.2wt%:4wt%) | Dimethoxyethane |
| Example 8 | **Mg nanoparticle@carbon nanotube** | 980 | 25 | 20 | 5 | 0.05 (0.2wt%:4wt%) | Dimethoxyethane |
| Example 9 | **Zn nanoparticle@carbon nanotube** | 980 | 25 | 20 | 5 | 0.05 (0.2wt%:4wt%) | Dimethoxyethane |
| Example 10 | Au nanoparticle@carbon nanotube | **1250** | 25 | 20 | 5 | 0.05 (0.2wt%:4wt%) | Dimethoxyethane |
| Example 11 | Au nanoparticle@carbon nanotube | **890** | 25 | 20 | 5 | 0.05 (0.2wt%:4wt%) | Dimethoxyethane |
| Example 12 | Au nanoparticle@carbon nanotube | **750** | 25 | 20 | 5 | 0.05 (0.2wt%:4wt%) | Dimethoxyethane |
| Example 13 | Au nanoparticle@carbon nanotube | **800** | 25 | 20 | 5 | 0.05 (0.2wt%:4wt%) | Dimethoxyethane |
| Example 14 | Au nanoparticle@carbon nanotube | **950** | 25 | 20 | 5 | 0.05 (0.2wt%:4wt%) | Dimethoxyethane |
| Example 15 | Au nanoparticle@carbon nanotube | **660** | 25 | 20 | 5 | 0.05 (0.2wt%:4wt%) | Dimethoxyethane |
| Example 16 | Au nanoparticle@carbon nanotube | **540** | 25 | 20 | 5 | 0.05 (0.2wt%:4wt%) | Dimethoxyethane |
| Example 17 | Au nanoparticle@carbon nanotube | **1550** | 25 | 20 | 5 | 0.05 (0.2wt%:4wt%) | Dimethoxyethane |
| Example 18 | Au nanoparticle@carbon nanotube | 980 | **40** | **35** | 5 | 0.05 (0.2wt%:4wt%) | Dimethoxyethane |
| Example 19 | Au nanoparticle@carbon nanotube | 980 | **20** | **18** | 5 | 0.05 (0.2wt%:4wt%) | Dimethoxyethane |
| Example 20 | Au nanoparticle@carbon nanotube | 980 | **15** | **14** | 5 | 0.05 (0.2wt%:4wt%) | Dimethoxyethane |
| Example 21 | Au nanoparticle@carbon nanotube | 980 | **18** | **16** | 5 | 0.05 (0.2wt%:4wt%) | Dimethoxyethane |
| Example 22 | Au nanoparticle@carbon nanotube | 980 | **22** | **20** | 5 | 0.05 (0.2wt%:4wt%) | Dimethoxyethane |
| Example 23 | Au nanoparticle@carbon nanotube | 980 | **12** | **10** | 5 | 0.05 (0.2wt%:4wt%) | Dimethoxyethane |
| Example 24 | Au nanoparticle@carbon nanotube | 980 | **10** | **8** | 5 | 0.05 (0.2wt%:4wt%) | Dimethoxyethane |
| Example 25 | Au nanoparticle@carbon nanotube | 980 | **50** | **40** | 5 | 0.05 (0.2wt%:4wt%) | Dimethoxyethane |
| Example 26 | Au nanoparticle@carbon nanotube | 980 | **5** | **4** | 5 | 0.05 (0.2wt%:4wt%) | Dimethoxyethane |
| Example 27 | Au nanoparticle@carbon nanotube | 980 | **2** | **2** | 5 | 0.05 (0.2wt%:4wt%) | Dimethoxyethane |
| Example 28 | Au nanoparticle@carbon nanotube | 980 | **0.5** | **0.3** | 5 | 0.05 (0.2wt%:4wt%) | Dimethoxyethane |
| Example 29 | Au nanoparticle@carbon nanotube | 980 | 25 | 20 | **0.5** | 0.05 (0.2wt%:4wt%) | Dimethoxyethane |
| Example 30 | Au nanoparticle@carbon nanotube | 980 | 25 | 20 | **1** | 0.05 (0.2wt%:4wt%) | Dimethoxyethane |
| Example 31 | Au nanoparticle@carbon nanotube | 980 | 25 | 20 | **8** | 0.05 (0.2wt%:4wt%) | Dimethoxyethane |
| Example 32 | Au nanoparticle@carbon nanotube | 980 | 25 | 20 | **15** | 0.05 (0.2wt%:4wt%) | Dimethoxyethane |
| Example 33 | Au nanoparticle@carbon nanotube | 980 | 25 | 20 | 5 | **0.01 (0.04wt%:4wt%)** | Dimethoxyethane |
| Example 34 | Au nanoparticle@carbon nanotube | 980 | 25 | 20 | 5 | **0.03 (0.12wt%:4wt%)** | Dimethoxyethane |
| Example 35 | Au nanoparticle@carbon nanotube | 980 | 25 | 20 | 5 | **0.07 (0.28wt%:4wt%)** | Dimethoxyethane |
| Example 36 | Au nanoparticle@carbon nanotube | 980 | 25 | 20 | 5 | **0.1 (0.4wt%: 4wt%)** | Dimethoxyethane |
| Example 37 | Au nanoparticle@carbon nanotube | 980 | 25 | 20 | 5 | 0.05 (0.2wt%:4wt%) | **Ethyl methyl carbonate** |
| Comparative Example 1 | / | / | / | / | / | / | Dimethoxyethane |
| Comparative Example 2 | Au nanoparticle@ graphite | 2 | / | 20 | 5 | / | Dimethoxyethane |

**Table 2**

| No. | Thickness of sodium metal layer (nm) | Overpotential (mV) | Coulombic efficiency (%) | Capacity retention rate after 100 cycles (%) | Sodium dendrite |
|---|---|---|---|---|---|
| Example 1 | 200 | 21 | 92.1 | 85.3 | None |
| Example 2 | 232 | 15 | 96.2 | 90.1 | None |
| Example 3 | 227 | 16 | 95.6 | 89.4 | None |
| Example 4 | 222 | 17 | 94.9 | 88.8 | None |
| Example 5 | 220 | 17 | 94.7 | 88.3 | None |
| Example 6 | 215 | 18 | 94.1 | 87.7 | None |
| Example 7 | 211 | 18 | 93.9 | 87.1 | None |
| Example 8 | 208 | 19 | 93.2 | 86.4 | None |
| Example 9 | 205 | 20 | 92.8 | 85.9 | None |
| Example 10 | 206 | 19 | 92.9 | 86.1 | None |
| Example 11 | 221 | 17 | 94.8 | 88.9 | None |
| Example 12 | 215 | 18 | 94.3 | 87.9 | None |
| Example 13 | 218 | 17 | 94.6 | 88.2 | None |
| Example 14 | 228 | 16 | 95.7 | 89.6 | None |
| Example 15 | 206 | 19 | 93.1 | 86.4 | None |
| Example 16 | 203 | 20 | 92.6 | 85.9 | None |
| Example 17 | 190 | 22 | 91.2 | 84.3 | None |
| Example 18 | 221 | 17 | 94.5 | 88.6 | None |
| Example 19 | 224 | 17 | 94.9 | 88.9 | None |
| Example 20 | 218 | 17 | 94.5 | 88.0 | None |
| Example 21 | 220 | 17 | 94.6 | 88.8 | None |
| Example 22 | 228 | 16 | 95.8 | 89.9 | None |
| Example 23 | 211 | 18 | 94.1 | 87.3 | None |
| Example 24 | 207 | 19 | 92.9 | 86.3 | None |
| Example 25 | 187 | 22 | 91.0 | 84.1 | None |
| Example 26 | 202 | 20 | 92.4 | 85.6 | None |
| Example 27 | 193 | 22 | 91.6 | 84.8 | None |
| Example 28 | 186 | 22 | 91.0 | 84.0 | None |
| Example 29 | 210 | 19 | 93.5 | 86.8 | None |
| Example 30 | 202 | 21 | 92.3 | 85.7 | None |
| Example 31 | 192 | 22 | 91.5 | 84.7 | None |
| Example 32 | 188 | 22 | 91.1 | 84.3 | None |
| Example 33 | 210 | 18 | 93.7 | 87.0 | None |
| Example 34 | 222 | 17 | 94.8 | 88.5 | None |
| Example 35 | 220 | 17 | 94.5 | 88.4 | None |
| Example 36 | 212 | 18 | 93.8 | 87.2 | None |
| Example 37 | 171 | 17 | 88.5 | 82.1 | None |
| Comparative Example 1 | 130 | 40 | 81.1 | 71.7 | Severe |
| Comparative Example 2 | 143 | 19 | 85.7 | 76.6 | Slight |

It can be learned from comparison between Examples 1 to 36 and Comparative Examples 1 and 2 that the batteries in Examples 1 to 36, in a case of no negative electrode active material, are provided with the carbon nanotube coatings to avoid the formation of the sodium dendrites and deliver excellent coulombic efficiency and cycling performance.

It can be learned from comparison between Examples 1 to 9 that the introduction of the metal nanoparticles on the basis of the provision of the carbon nanotubes can effectively reduce the overpotential, further avoid the formation of the sodium dendrites, and deliver better coulombic efficiency and cycling performance.

It can be learned from comparison between Example 2 and Examples 10 to 17 that the formation of the sodium dendrites can be avoided in all cases where the specific surface areas of the carbon nanotubes are greater than or equal to 500 m²/g, the coulombic efficiency and cycling performance delivered when the specific surface areas are within a range of 500-1500 m²/g are better than that delivered when the specific surface areas are greater than 1500 m²/g, and further, better coulombic efficiency and cycling performance are delivered when the specific surface areas are within a range of 750-950 m²/g.

It can be learned from comparison between Example 2 and Examples 18 to 28 that the formation of the sodium dendrites can be avoided in all cases where the tube diameters of the carbon nanotubes are 0.5-50 nm, and that better coulombic efficiency and cycling performance are delivered when the specific surface areas are within a range of 10 nm to 40 nm. In addition, the formation of the sodium dendrites can be avoided in all cases where the particle sizes of the metal nanoparticles are 0.3-40 nm, and better coulombic efficiency and cycling performance are delivered when the particle sizes are within a range of 8 nm to 35 nm.

It can be learned from comparison between Example 2 and Examples 29 to 32 that the formation of the sodium dendrites can be avoided in all cases where the thicknesses of the carbon nanotube coatings are 0.5-15 µm, and that better coulombic efficiency and cycling performance are delivered when the thicknesses are within a range of 0.5 µm to 5 µm.

It can be learned from comparison between Example 2 and Examples 33 to 36 that the formation of the sodium dendrites can be avoided and the overpotential can be effectively reduced in all cases where M1:M2=0.01-0.1, and that better coulombic efficiency and cycling performance are delivered when M1:M2=0.03-0.07.

It can be learned from comparison between Example 2 and Example 37 that the use of the ether solvent can further improve the coulombic efficiency and cycling performance.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A sodium-ion battery, comprising a positive electrode plate, a separator, and a negative electrode current collector, wherein the separator is disposed between the positive electrode plate and the negative electrode current collector, a coating is provided on a surface of the negative electrode current collector, the coating comprises a carbon material, and the carbon material comprises carbon nanotubes.

2. The sodium-ion battery according to claim 1, **characterized in that** the carbon nanotube has at least one of the following characteristics:
(1) a specific surface area is greater than or equal to 500 m²/g, optionally, the specific surface area of the carbon nanotube is 500-1500 m²/g, and further optionally, the specific surface area of the carbon nanotube is 750-1000 m²/g; and
(2) a tube diameter is 0.5-50 nm, and optionally, the tube diameter is 10-40 nm.

3. The sodium-ion battery according to claim 1 or 2, **characterized in that** a number of metal nanoparticles are attached to the carbon nanotube.

4. The sodium-ion battery according to claim 3, **characterized in that** the metal nanoparticle has at least one of the following characteristics:
(1) a metal in the metal nanoparticle is a metal capable of forming an alloy with sodium, and optionally, the metal nanoparticle comprises one or more of Au nanoparticle, Ag nanoparticle, Bi nanoparticle, Sn nanoparticle, Co nanoparticle, Ni nanoparticle, Mg nanoparticle, and Zn nanoparticle;
(2) particle size of the metal nanoparticle is at least 0.2 nm smaller than the tube diameter of the carbon nanotube, optionally, the particle size of the metal nanoparticle is 0.2-10 nm smaller than the tube diameter of the carbon nanotube, and further optionally, the particle size of the metal nanoparticle is 1-5 nm smaller than the tube diameter of the carbon nanotube; and
(3) the particle size of the metal nanoparticle is 0.3-40 nm, and optionally, the particle size of the metal nanoparticle is 8-35 nm.

5. The sodium-ion battery according to claim 3 or 4, **characterized in that** in the coating, mass of the metal nanoparticle is M1, and mass of the carbon nanotube is M2, wherein M1:M2=0.01-0.1, and optionally, M1:M2=0.03-0.07.

6. The sodium-ion battery according to any one of claims 1 to 5, **characterized in that** thickness of the coating is 0.5-15 µm, and optionally, the thickness of the coating is 0.5-5 µm.

7. The sodium-ion battery according to any one of claims 1 to 6, **characterized in that** a material of the coating further comprises a binder, optionally, the binder comprises a polymer binder, and further optionally, the binder comprises one or more of styrene-butadiene rubber, polyacrylic acid, polyacrylic acid sodium, polyacrylamide, polyvinyl alcohol, sodium alginate, polymethacrylic acid, and carboxymethyl chitosan.

8. The sodium-ion battery according to any one of claims 1 to 7, **characterized in that** the sodium-ion battery further comprises an electrolyte.

9. The sodium-ion battery according to claim 8, **characterized in that** the electrolyte has at least one of the following characteristics:
(1) a solvent in the electrolyte comprises an ether solvent, and optionally, the solvent in the electrolyte comprises one or more of dimethoxyethane, diethoxyethane, diethylene glycol dimethyl ether, triethylene glycol dimethyl ether, tetraethylene glycol dimethyl ether, 1,3-dioxolane, tetrahydrofuran, methyltetrahydrofurann, diphenyl ether, and crown ether;
(2) an electrolytic sodium salt in the electrolyte comprises one or more of sodium hexafluorophosphate, sodium difluoroxalate borate, sodium tetrafluoroborate, sodium bisoxaloborate, sodium perchlorate, sodium hexafluoroarsenate, sodium bis(fluorosulfonyl)imide, sodium trifluoromethanesulfonate, and sodium bis(trifluoromethanesulfonyl)imide; and
(3) the electrolytic sodium salt in the electrolyte has a molar concentration of 0.5 mol/L to 8 mol/L, and optionally, the electrolytic sodium salt in the electrolyte has a molar concentration of 1 mol/L to 4 mol/L.

10. The sodium-ion battery according to any one of claims 1 to 9, **characterized in that** a sodium metal layer is formed on at least one of an inner wall of the carbon nanotube, an outer wall of the carbon nanotube, and the surface of the negative electrode current collector.

11. The sodium-ion battery according to claim 10, **characterized in that** the sodium metal layer is formed in a charge and discharge process of the sodium-ion battery, and optionally, the charge and discharge process comprises a charge and discharge process during formation.

12. The sodium-ion battery according to claim 10 or 11, **characterized in that** thickness of the sodium metal layer is P, and 0<P≤400 nm.

13. A preparation method of sodium-ion battery, comprising the following steps:
mixing a material of a coating with a solvent to prepare a slurry, wherein the material of the coating comprises a carbon material, and the carbon material comprises carbon nanotubes;
applying the slurry on a surface of a negative electrode current collector, followed by drying, to form a coating; and
laminating the negative electrode current collector with the coating, a separator, and a positive electrode plate.

14. The preparation method of sodium-ion battery according to claim 13, **characterized in that** the sodium-ion battery is subjected to at least one charge and discharge process, a sodium metal layer is formed on at least one of an inner wall of the carbon nanotube, an outer wall of the carbon nanotube, and the surface of the negative electrode current collector, and optionally, the charge and discharge process comprises a charge and discharge process during formation.

15. An electric apparatus, **characterized by** comprising at least one of the sodium-ion battery according to any one of claims 1 to 12 and a sodium-ion battery prepared using the preparation method according to claim 13 or 14.
